# EUROPÄISCHE PATENTSCHRIFT

(11) **EP 3 041 984 B1**
(45) Veröffentlichungstag und Bekanntmachung des Hinweises auf die Patenterteilung: **18.10.2017**
(21) Anmeldenummer: 14750456.7
(22) Anmeldetag: 07.08.2014
(51) Int. Cl.: F16K 11/16, D06F 58/22, D06F 58/24, A47L 15/42

(54) **VERTEILEN EINER FLÜSSIGKEIT IN EINEM HAUSHALTSGERÄT**
DISTRIBUTION OF LIQUID IN A HOUSEHOLD APPLIANCE
DISTRIBUTION D'UN LIQUIDE DANS UN APPAREIL MÉNAGER

(30) Priorität: 02.09.2013 DE 102013217468
(43) Veröffentlichungstag der Anmeldung: 13.07.2016
(73) Patentinhaber: BSH Hausgeräte GmbH, 81739 München (DE)
(72) Erfinder: WUTTGE, Oliver, 12157 Berlin (DE)
(86) Internationale Anmeldenummer: PCT/EP2014/066960
(87) Internationale Veröffentlichungsnummer: WO 2015/028270

(56) Entgegenhaltungen:
- EP-A1- 1 767 135
- DE-A1- 10 335 743
- DE-A1-102008 033 388
- DE-A1-102009 001 548
- DE-A1-102010 027 739
- US-A- 6 003 552

## Beschreibung

Die Erfindung betrifft eine Flüssigkeitsweiche zum Verteilen einer Flüssigkeit in einem Haushaltsgerät, wobei die Flüssigkeitsweiche mindestens aufweist: mindestens eine erste Gruppe von Austrittsöffnungen und eine zweite Gruppe von Austrittsöffnungen.

Die Erfindung betrifft ferner ein Haushaltsgerät, aufweisend mindestens eine solche Flüssigkeitsweiche. Die Erfindung ist insbesondere anwendbar auf eine Verteilung von Kondenswasser in einem Wäschetrocknungsgerät, insbesondere zur Abreinigung mindestens einer Funktionseinheit des Wäschetrocknungsgeräts mittels des Kondenswassers.

Aus der DE 10 2008 033 388 A1 gehen eine Flüssigkeitsweiche sowie ein Haushaltsgerät solcher Gattung hervor. Dort ist ein Haushaltsgerät mit zwei übereinander angeordneten Wärmetauschern beschrieben, deren jedem eine Bespüleinrichtung zum Abspülen von Flusen zugeordnet ist. Beide Bespüleinrichtungen über jeweils zugehörige Absperrventile an eine einzige Kaltwasserleitung angeschlossen sein.

Aus der DE 10 2010 027 739 A1 geht eine Wasserweiche für ein Haushaltsgerät hervor, die eine in zwei Leitungen sich verzweigende und druckseitig nach einer Förderpumpe angeordnete Förderleitung und ein programmgesteuertes Schaltelement aufweist. Dieses Schaltelement wirkt direkt oder indirekt von außen auf die zwei Leitungen. Diese bestehen zumindest im Wirkungsbereich des Schaltelements aus einem elastischen Material. In den alternativen Endstellungen übt das Schaltelement nur auf eine der beiden Leitungen Druck aus, so dass diese so stark verformt wird, dass der Durchfluss durch sie zumindest stark eingeschränkt ist. Die jeweils andere Leitung wird dabei nicht verformt und der Durchfluss durch sie nicht eingeschränkt.

Aus der EP 1 767 135 A1 geht ein Haushaltsgerät mit einer ersten, einer zweiten und einer dritten Leitung für Wasser sowie einer Umschaltvorrichtung hervor, mit welcher Wasser wahlweise von der dritten in die erste oder die zweite Leitung einspeisbar ist. Die Umschaltvorrichtung hat einen Eingangsabschnitt mit einer ersten und einer zweiten Kammer von welcher ersten Kammer die erste Leitung und von welcher zweiten Kammer die zweite Leitung ausgeht, und die dritte Leitung ist als Schlauch ausgestaltet und mündet in den Eingangsabschnitt. Es sind Antriebsmittel vorgesehen, um den Schlauch relativ zum Eingangsabschnitt in mindestens eine erste und eine zweite Stellung zu bringen, wodurch das Verhältnis der Strömungswiderstände vom Schlauch in die erste und die zweite Kammer änderbar ist.

Die WO 2008/119611 A1 beschreibt ein Verfahren und eine Vorrichtung zum Reinigen eines Bauteils, insbesondere eines Verdampfers einer Kondensatoreinrichtung, sowie Wasch- oder Wäschetrockner mit einer solchen Vorrichtung. Zum Reinigen eines innerhalb eines Prozessluftkreislaufes eines Wasch- oder Wäschetrockners angeordneten Bauteiles, insbesondere eines Verdampfers einer Kondensatoreinrichtung, wird dazu Kondensatwasser, welches in dem Prozessluftkreislauf aus dem Trocknen von feuchter Wäsche gewonnen und in einer Kondensatwasserwanne aufgefangen wird, zu einem oberhalb des Verdampfers vorgesehenen Spülbehälter hin geleitet und durch dessen schlagartiges Öffnen auf der Austrittsseite als Wasserschwall an das betreffende Bauteil abgegeben. Der Spülbehälter deckt insbesondere eine Auslassöffnung für Spülwasser mittels eines Verschlusstellers ab. Der Verschlussteller wird durch den Spülbehälter geführt und ist mit einem diesbezüglich außenliegenden Teil mit einer Betätigungseinheit verbunden. Dabei kann der Verschlussteller einfach von der Auslassöffnung abheben, z. B. durch Verwirbelungen bei einem Einlauf einer Spülflüssigkeit.

Die WO 2010/112321 A1 offenbart eine Vorrichtung zum Spülen mindestens eines zu reinigenden Bauteils eines Wäschetrocknungsgeräts mittels einer Spülflüssigkeit und weist auf: einen Spülbehälter zur Bevorratung der Spülflüssigkeit, wobei der Spülbehälter eine Austrittsöffnung zum Ablassen der Spülflüssigkeit zu dem reinigenden Bauteil als auch ein Verschlussteil zum wahlweisen Öffnen und Verschließen der Austrittsöffnung aufweist; und eine Betätigungseinheit zur Betätigung des Verschlussteils, wobei das Verschlussteil einen Dichtkopf zum Verschließen der Austrittsöffnung aufweist, welcher über ein Federelement mit dem Spülbehälter verbunden ist und durch das Federelement auf die Austrittsöffnung gedrängt wird.

Aus dem US-Patent 6,003,552 geht ein mit einem Kipphebel gesteuertes Ventil zum wahlweisen Verschließen eines von zwei Auslässen hervor, welches zwei Zylinder aufweist. In jedem Zylinder ist ein longitudinal entlang einer verlängerten Achse eines Ventilsitzes hin und her beweglicher Kolben mit einer Dichtungseinrichtung eingesetzt. Dabei umgibt jeder Ventilsitz einen Auslass. Der Kipphebel wird gedreht um jeweils einen Kolben auf den zugeordneten Ventilsitz zu pressen, während der jeweils andere Kolben von seinem zugeordneten Ventilsitz abgezogen wird.

Es ist ferner bekannt, Wasser zur einem Prozessluftfilter, welcher schräg in einem Prozessluftkanal eines Wäschetrockners angeordnet ist, zu pumpen, so dass das Wasser von oben nach unten über den Prozessluftfilter läuft und dabei anhaftende Flusen mitnimmt.

Es ist die **Aufgabe** der vorliegenden Erfindung, die Nachteile des Standes der Technik zumindest teilweise zu überwinden und insbesondere eine verbesserte Möglichkeit zur Abreinigung von auch mehreren Funktionsbauteilen eines Haushaltsgeräts bereitzustellen.

Diese Aufgabe wird erfindungsgemäß entsprechend der unabhängigen Patentansprüche gelöst. Bevorzugte Ausführungsformen sind insbesondere den abhängigen Patentansprüchen sowie der nachfolgenden Beschreibung und der beigefügten Zeichnung entnehmbar.

Die Aufgabe wird demnach gelöst durch eine Flüssigkeitsweiche zum Verteilen einer Flüssigkeit in einem Haushaltsgerät, wobei die Verteilungseinrichtung mindestens aufweist: mindestens eine erste Gruppe von Austrittsöffnungen und eine zweite Gruppe von Austrittsöffnungen. Außerdem weist sie einen starren Bereich auf, in welchem die Austrittsöffnungen gruppenweise in mehreren Reihen angebracht sind, sowie ein den Austrittsöffnungen gemeinsames flexibles Dichtelement, welches mittels mindestens einer Stellvorrichtung dichtend abwechselnd auf die erste Gruppe von Austrittsöffnungen und auf die zweite Gruppe von Austrittsöffnungen drückbar ist.

Diese Flüssigkeitsweiche ermöglicht auf besonders einfache Weise eine zumindest wechselweise Flüssigkeitsverteilung durch die mindestens zwei Gruppen von Austrittsöffnungen. Dadurch kann auf mehrfache, getrennt verlaufende Flüssigkeitsleitungen verzichtet werden, was eine besonders kompakte Bauweise ermöglicht. Insbesondere kann so durch ein Fallrohr zugeführtes Wasser einfach verteilt werden, z.B. auf unterschiedliche Bereiche eines abzureinigenden Funktionsteils und/oder auf mehrere abzureinigende Funktionsteile.

Erfindungsgemäß weist die Flüssigkeitsweiche einen starren Bereich auf, in welchem die Austrittsöffnungen gruppenweise in mehreren Reihen eingebracht sind, d.h. die mindestens eine Austrittsöffnung einer ersten Gruppe in einer Reihe, die mindestens eine Austrittsöffnung einer zweiten Gruppe in einer weiteren Reihe usw.

Es ist eine Weiterbildung, dass die Austrittsöffnungen einer Gruppe in einer linearen Reihe angeordnet sind, insbesondere gleichbeabstandet angeordnet sind. Die Stellvorrichtung kann das Dichtelement dann beispielsweise mittels z.B. einer einfachen geraden Stange praktisch gleichzeitig auf eine Reihe von Austrittsöffnungen drücken.

Die Flüssigkeit mag insbesondere Wasser sein, z.B. Leitungswasser und/oder Kondenswasser (auch als Kondensat oder Kondensatwasser bezeichnet). Das Wasser mag reines Wasser sein oder Zusätze enthalten, z.B. Reinigungsmittel und/oder Pflegezusätze. Das Wasser mag klares Wasser sein oder mag z.B. durch Flusen, Haare, usw. verunreinigtes Wasser sein.

Dadurch, dass das flexible Dichtelement dichtend auf die erste Gruppe von Austrittsöffnungen oder auf die zweite Gruppe von Austrittsöffnungen drückbar ist, können diese Gruppen insbesondere abwechselnd geöffnet bzw. geschlossen sein, also z.B. die erste Gruppe geöffnet sein und die zweite Gruppe geschlossen sein, oder umgekehrt.

Jeder der Gruppen ist mindestens eine Austrittsöffnung zugeordnet. Eine Gruppe mag also eine oder mehrere Austrittsöffnungen aufweisen, welche durch das Dichtelement gemeinsam geöffnet oder geschlossen bzw. abgedichtet werden.

Jedoch ist die Flüssigkeitsweiche nicht auf zwei Gruppen von Austrittsöffnungen beschränkt und mag z.B. auch eine dritte, eine vierte usw. Gruppe von Austrittsöffnungen aufweisen. Insbesondere mag jede der Gruppen mehrere Austrittsöffnungen aufweisen.

Es ist eine Weiterbildung, dass die Stellvorrichtung das gemeinsame Dichtelement auf eine oder mehrere Gruppen von Austrittsöffnungen und gleichzeitig nicht auf eine oder mehrere andere Gruppen von Austrittsöffnungen drücken kann. In anderen Worten ist dann die mindestens eine Austrittsöffnung mindestens einer Gruppe geöffnet, und die mindestens eine Austrittsöffnung der anderen mindestens einen Gruppe ist durch das Dichtelement verschlossen. Dies mag auch bei einem Vorliegen von drei oder mehr Gruppen von Austrittsöffnungen gelten.

Es ist eine Weiterbildung davon, dass die Stellvorrichtung das gemeinsame Dichtelement auf alle Gruppen von Austrittsöffnungen bis auf eine Gruppe drücken kann. In anderen Worten ist dann die mindestens eine Austrittsöffnung nur genau einer Gruppe geöffnet, und die mindestens eine Austrittsöffnung der mindestens einen anderen Gruppe ist durch das Dichtelement verschlossen. Auch dies mag bei einem Vorliegen von drei oder mehr Gruppen von Austrittsöffnungen gelten.

Das flexible Dichtelement mag beispielsweise aus Kunststoff bestehen, insbesondere aus Gummi. Das Dichtelement mag insbesondere als dünne Schicht, Lage oder Matte vorliegen.

Es ist eine bevorzugte Ausgestaltung, dass die Austrittsöffnungen zumindest einer Gruppe als Düsen ausgebildet sind. Dadurch kann die Flüssigkeitsweiche als Spritzkopf oder Diffuser verwendet werden, insbesondere zum selektiven Beaufschlagen, insbesondere Bespritzen, unterschiedlicher Bereiche eines abzureinigenden Funktionsteils und/oder zum Beaufschlagen, insbesondere Bespritzen, unterschiedlicher abzureinigender Funktionsteile, insbesondere von nahe zueinander angeordneten Funktionsteilen. Zudem wird eine besonders kompakte Bauform erreicht. Das "Bespritzen" kann ein Bespritzen mit einem aufgeweiteten oder mit einem nicht aufgeweiteten Strahl umfassen.

Die Austrittsöffnungen einer Gruppe können gleich oder unterschiedlich gestaltet sein.

Diese Ausgestaltung ist besonders vorteilhaft einsetzbar zusammen mit einem zu der Flüssigkeitsweiche führenden Fallrohr. Die Flüssigkeitsweiche kann dann durch das Fallrohr insbesondere schwallartig herunterströmendes Wasser wahlweise durch die Gruppen von Austrittsöffnungen verteilen.

Es ist eine zur besonders einfachen Umsetzung einer Abdichtung der Austrittsöffnungen einer Gruppe bevorzugte Ausgestaltung, dass der starre Bereich zwei parallel zueinander angeordnete Reihen oder Gruppen von Austrittsöffnungen aufweist. Dies vereinfacht einen Einsatz eines Kipphebels, insbesondere zweiarmigen Kipphebels, zur abwechselnden Öffnung und Abdichtung unterschiedlicher Reihen von Austrittsöffnungen.

Es ist eine weitere bevorzugte Ausgestaltung, dass das Dichtelement eine gewellte Querschnittsform mit aufeinanderfolgenden Spitzenabschnitten aufweist und die Stellvorrichtung dazu eingerichtet ist, mindestens einen Spitzenabschnitt des Dichtelements auf jeweils eine Gruppe von Austrittsöffnungen zu drücken. Dies ermöglicht ein besonders einfaches und sicheres Aufsetzen des Dichtelements auf eine Gruppe von Austrittsöffnungen, insbesondere falls diese Austrittsöffnungen einem Spitzenabschnitt gegenüberliegen. Insbesondere wird das Dichtelement beim Andrücken auf die Gruppe von Austrittsöffnungen nicht stark gedehnt.

Es ist eine bevorzugte Weiterbildung, dass das Dichtelement als ein Profil mit gewellter Querschnittsform ausgebildet ist. Der Spitzenabschnitt ist dann bei dreidimensionaler Betrachtung ein länglicher Spitzenbereich, der sich in Längsrichtung des Profils erstreckt. Falls die Austrittsöffnungen einer Gruppe sich in einer Reihe erstrecken, die deckungsgleich zu einem solchen Spitzenbereich ist, braucht dieser Spitzenbereich nur senkrecht auf diese Gruppe gedrückt zu werden, ggf. auch nur punktuell, um alle zugehörigen Austrittsöffnungen zu schließen. Bei Aufhebung der Kraftaufbringung auf das flexible Dichtelement federt dieses zurück und hebt sich von den Austrittsöffnungen ab.

Eine gewellte Querschnittsform mag beispielsweise eine sinusartige Querschnittsform oder eine mäanderartige Querschnittsform umfassen. Die mäanderartige Querschnittsform mag insbesondere entlang ihres Verlaufs abwechselnd gerade Teilabschnitte und gekrümmte (z.B. halbringförmige) Teilabschnitte, nämlich die Spitzenabschnitte, aufweisen. Aufeinanderfolgende gekrümmte Spitzenabschnitte weisen eine unterschiedliche Krümmungsrichtung auf. Die gekrümmten Teilabschnitte mögen auch polygonzugartig ausgebildet sein, z.B. eckig U-förmig.

Es ist eine weitere bevorzugte Ausgestaltung, dass die Stellvorrichtung einen zweiarmigen Hebel und eine Stelleinheit zum Verschwenken des Hebels zwischen zwei Endstellungen aufweist, wobei je nach Endstellung unterschiedliche Spitzenabschnitte des Dichtelements reihenweise abwechselnd auf die zugehörigen Gruppen von Austrittsöffnungen gedrückt werden können. Die abwechselnde Öffnung und Abdichtung der Gruppen von Auslassöffnungen lässt sich also durch eine einfache Verschwenkung zwischen den Endstellungen erreichen.

Die Stelleinheit mag beispielsweise ein Aktor oder ein Elektromotor sein. Die Stelleinheit mag mindestens eine Rückstellfeder aufweisen.

Es ist noch eine weitere bevorzugte Ausgestaltung, dass mindestens eine Stellvorrichtung auf eine Stellposition einstellbar ist, in welcher sie das Dichtelement auf keine Gruppe von Austrittsöffnungen drückt. Dadurch kann Flüssigkeit durch alle Austrittsöffnungen gleichzeitig austreten. Beispielsweise mag im Fall des zweiarmigen Hebels dieser mittels der Stellvorrichtung in eine Zwischenstellung verbracht werden, in welcher es das Dichtelement auf keine der Austrittsöffnungen drückt. Diese Ausgestaltung ermöglicht eine noch vielseitigere Flüssigkeitsverteilung.

Es ist ferner eine bevorzugte Ausgestaltung, dass die Flüssigkeitsweiche eine Einlassöffnung an einer Seite aufweist und die Austrittsöffnungen an einer dazu gegenüberliegenden Seite angeordnet sind. Diese ermöglicht einen Austritt von Flüssigkeit mit geringen Druckverlusten. Die Einlassöffnung mag beispielsweise mit einem Fallrohr verbunden sein.

Die Aufgabe wird erfindungsgemäß auch gelöst durch ein Haushaltsgerät, welches mindestens eine erfindungsgemäße Flüssigkeitsweiche wie oben beschrieben aufweist. Das Haushaltsgerät kann analog ausgestaltet werden und ergibt die gleichen Vorteile. Das Haushaltsgerät ist insbesondere ein flüssigkeitsführendes, insbesondere wasserführendes, Haushaltsgerät. Das Haushaltsgerät ist insbesondere ein HaushaltsGroßgerät.

Es ist eine bevorzugte Ausgestaltung, dass das Haushaltsgerät mindestens zwei mittels einer Flüssigkeit abzureinigende Funktionseinheiten als auch mindestens eine Flüssigkeitsweiche, deren Gruppen von Austrittsöffnungen zur gruppenweisen Flüssigkeitszufuhr zu zumindest zwei abzureinigenden Funktionseinheiten eingerichtet ist, aufweist. Folglich kann die Flüssigkeitsweiche dazu verwendet werden, gezielt nur einer oder ggf. auch beiden abzureinigenden Funktionseinheiten Flüssigkeit zuzuführen, insbesondere diese mit Wasser zu bespritzen. Auf getrennte Spritzköpfe oder Diffusoren und ihre jeweiligen Flüssigkeitszuführungen kann verzichtet werden. Jedoch ist es auch möglich, eine Flüssigkeitsweiche zum Abreinigen zweier unterschiedlicher Bereiche einer Funktionseinheit zu verwenden.

Es ist außerdem eine bevorzugte Ausgestaltung, dass die Gruppen von Austrittsöffnungen zum gruppenweisen Bespritzen von zumindest zwei abzureinigenden Funktionseinheiten eingerichtet sind.

Das Haushaltsgerät mag insbesondere ein flüssigkeitsführendes Haushaltsgroßgerät sein, z.B. eine Spülmaschine, ein Wäschetrocknungsgerät oder eine Waschmaschine. Das Haushaltsgerät mag aber auch ein Haushalts-Kleingerät sein. Falls das Haushaltsgerät ein Wäschetrocknungsgerät ist, kann es als eigenständiger Wäschetrockner oder als Wäschetrocknungs-/Wasch-Kombination ("Waschtrockner") vorliegen. Es wird besonders bevorzugt, dass das Wäschetrocknungsgerät eine Wärmepumpe aufweist. In diesem Fall dient ein Verdampfer der Wärmepumpe als ein Kondensator zum Abkühlen von aus einem Wäschebehandlungsraum austretender feucht-warmer Prozessluft. Der Verdampfer ist in oder an dem Prozessluftkanal als Wärmetauscher ausgebildet

Es ist eine besonders bevorzugte Ausgestaltung, dass das Haushaltsgerät ein Wäschetrocknungsgerät ist und eine erste abzureinigende Funktionseinheit in Form eines Prozessluftfilters und eine zweite abzureinigende Funktionseinheit in Form eines Wärmetauschers (insbesondere eines Verdampfers einer Wärmepumpe) vorliegt. Diese sind bevorzugt nahe zueinander angeordnet, was ihre Abreinigung mittels einer gemeinsamen Flüssigkeitsweiche erleichtert. Zudem mögen dies die einzigen abzureinigenden Funktionseinheiten sein, so dass auf eine weitere Abreinigungseinrichtung verzichtet werden kann.

Es ist auch eine bevorzugte Ausgestaltung, dass das Haushaltsgerät einen Spülbehälter mit einem daran verschließbar angeschlossenen Fallrohr aufweist, welches Fallrohr an seinem dem Spülbehälter abgewandten Ende die Flüssigkeitsweiche aufweist. So kann nach einem Öffnen des Spülbehälters und Einstellung der Flüssigkeitsweiche eine Funktionseinheit des Haushaltsgeräts gezielt angespritzt werden, ggf. auch mehrere Funktionseinheiten gleichzeitig. Alternativ oder zusätzlich mag die Flüssigkeitsweiche eingangsseitig beispielsweise an eine Pumpe angeschlossen sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Figuren der beigefügten Zeichnung näher erläutert wird. Dabei können zur Übersichtlichkeit gleiche oder gleichwirkende Elemente mit gleichen Bezugszeichen versehen sein. Es zeigen:
- Fig.1: ein Fallrohr eines Wäschetrockners mit einer angeschlossenen Flüssigkeitsweiche in einer Schrägansicht;
- Fig.2: die Flüssigkeitsweiche der Fig. 1 in Seitenansicht;
- Fig.3: die Flüssigkeitsweiche als Schnittdarstellung in Ansicht von hinten mit der Stellvorrichtung in einer ersten Endstellung; und
- Fig.4: die Flüssigkeitsweiche in einer zu Fig.3 analogen Darstellung mit der Stellvorrichtung in einer zweiten Endstellung.

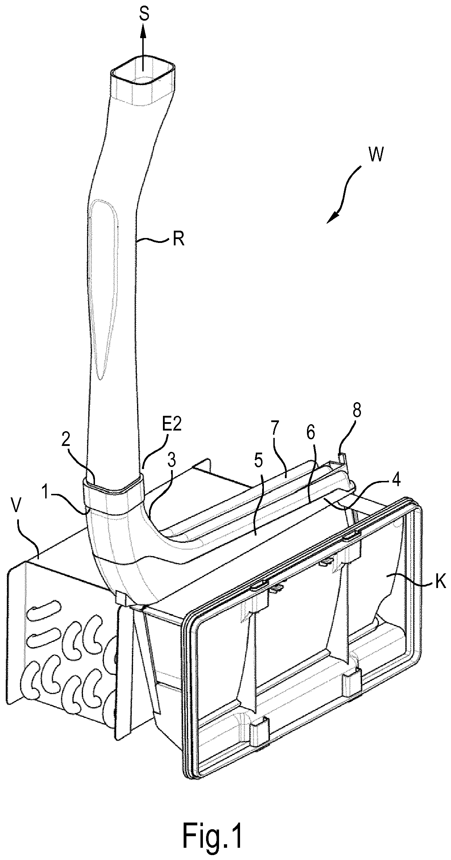

**Fig.1** zeigt in einer Schrägansicht ein Fallrohr R eines Wärmepumpen-Wäschetrockners W, das endseitig mit einer Flüssigkeitsweiche 1 verbunden ist. Das Fallrohr R ist an seinem oberen Ende E1 mit einem Spülbehälter S verbunden. Der Spülbehälter S ist über ein Verschlussventil (o. Abb.) gegenüber dem Fallrohr R wahlweise absperrbar und öffenbar, z.B. analog zu der WO 2008/119611 A1 oder zu der WO 2010/112321 A1.

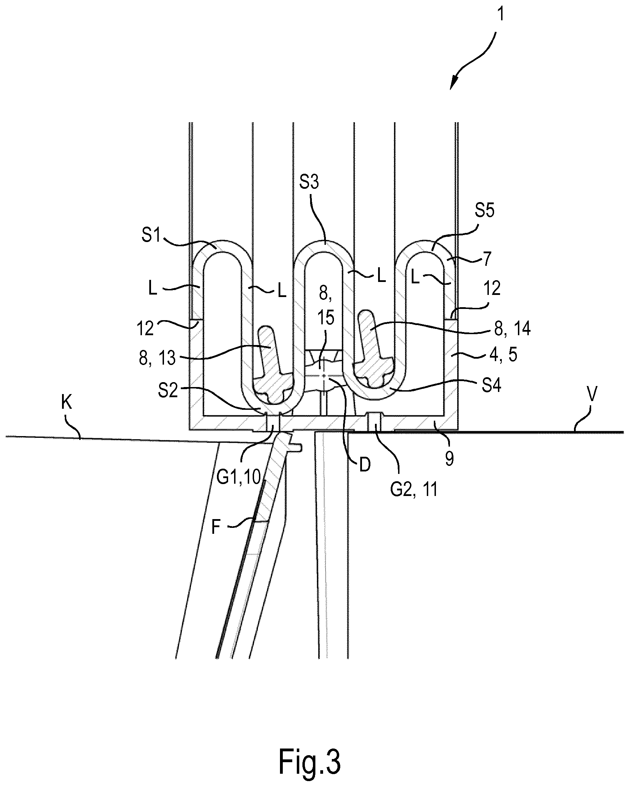

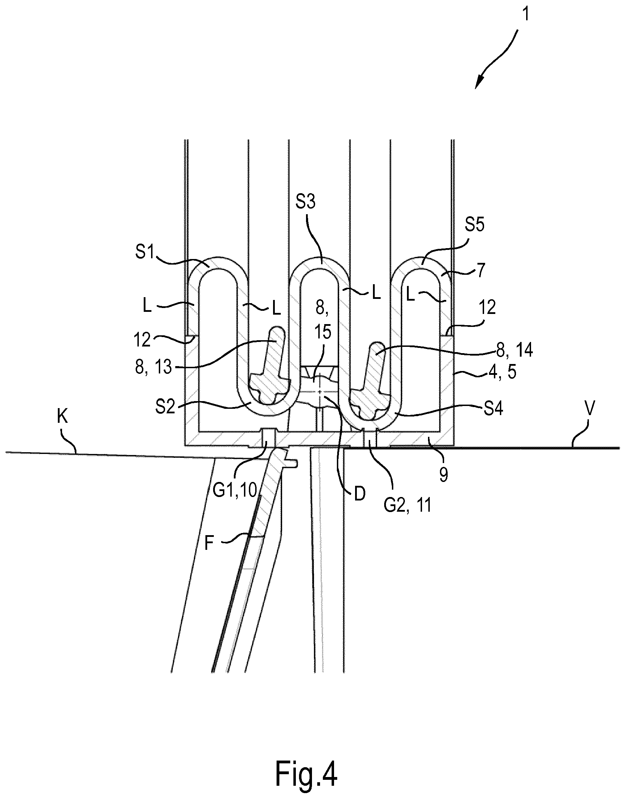

An seinem unteren Ende E2 ist das Fallrohr R in eine Eintrittsöffnung 2 der Flüssigkeitsweiche 1 eingesteckt. Die Eintrittsöffnung 2 befindet sich in einer oberen Seite der Flüssigkeitsweiche 1, und zwar an einem hinteren Endabschnitt 3 eines starren Bereichs 4 der Flüssigkeitsweiche 1. Der starre Bereich 4 weist vor dem hinteren Endabschnitt 3 einen länglich wannenförmigen Abschnitt ("Verteilerabschnitt 5") auf. Der Verteilerabschnitt 5 weist eine offene Oberseite 6 auf. Die offene Oberseite 6 ist von einem flexiblen, profilartigen Dichtelement 7 bedeckt, welches eine wellenartige Querschnittsform aufweist (siehe auch Fig.3 und 4). Der starre Bereich 4 und das Dichtelement 7 bilden einen wasserdichten Flüssigkeitsraum. Die Flüssigkeitsweiche 1 weist zudem eine Stellvorrichtung 8 zum Bewegen bzw. Verformen des Dichtelements 7 zumindest in zwei Endstellungen auf.

Der Endabschnitt 3 weist einen gebogenen Verlauf auf, um aus dem Fallrohr R nach unten austretendes Wasser mit einem nur geringen Energieverlust in den Verteilerabschnitt 5 umzulenken. Das Wasser strömt also mit immer noch hoher Geschwindigkeit in den Verteilerabschnitt 5. Mittels der Stellvorrichtung 8 ist es möglich, das in den Verteilerabschnitt 5 einströmende Wasser in einer ersten Endstellung auf einen benachbart angeordneten Verdampfer V des Wärmepumpen-Wäschetrockners W zu leiten, um diesen abzureinigen. In einer zweiten Endstellung der Stellvorrichtung 8 wird das Wasser hingegen auf einen benachbart angeordneten Prozessluftfilter F, welcher sich in einem Abschnitt K eines Prozessluftkanals befindet, geleitet. Die Stellvorrichtung 8 mag auch eine Zwischenstellung einnehmen, in welcher sowohl der Verdampfer V als auch der Prozessluftfilter F gleichzeitig mit dem Wasser beaufschlagt und dadurch abgereinigt werden können.

Der den Prozessluftfilter F aufnehmende Abschnitt K des Prozessluftkanals und der auch als Wärmetauscher zum Prozessluftkanal hin dienende Verdampfer V sind nahe zueinander benachbart angeordnet, so dass sich eine besonders hohe Reinigungsleistung mittels der Flüssigkeitsweiche 1 ergibt. Die Flüssigkeitsweiche 1 befindet sich dazu bevorzugt oberhalb und zwischen dem Verdampfer V und dem Prozessluftfilter F, ggf. in einer gemeinsamen Bauteileeinheit.

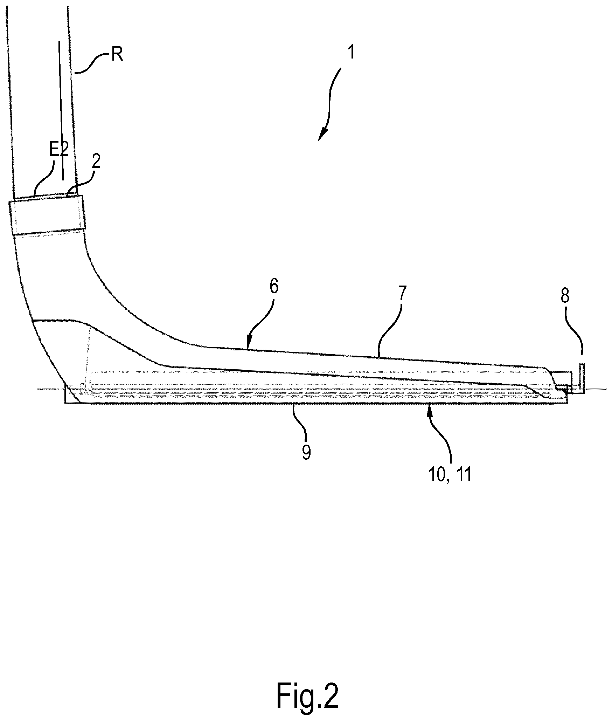

**Fig.2** zeigt die Flüssigkeitsweiche 1 in Seitenansicht. In einem flachen unterseitigen Boden 9 des Verteilerabschnitts 5 sind mehrere Austrittsöffnungen 10, 11 eingebracht, um das in dem Verteilerabschnitt 5 befindliche Wasser zu verteilen, z.B. durch ein Bespritzen oder anderes Beaufschlagen mit Wasser.

**Fig.3** zeigt die Flüssigkeitsweiche 1 als Schnittdarstellung in Ansicht von hinten mit der Stellvorrichtung 8 in einer ersten Endstellung. Die in dem Boden 9 eingebrachten Austrittsöffnungen 10, 11 sind in zwei Gruppen aufgeteilt, nämlich in eine erste Gruppe G1 von Austrittsöffnungen 10 und in eine zweite Gruppe G2 von Austrittsöffnungen 11. Die Austrittsöffnungen 10 und die Austrittsöffnungen 11 sind jeweils in einer Reihe und zueinander parallel angeordnet. Die Austrittsöffnungen 10 und die Austrittsöffnungen 11 mögen gleich oder unterschiedlich geformt sein und sind hier in Form von senkrechten Löchern in dem Boden 9 ausgebildet. Die Austrittsöffnungen 10 und/oder die Austrittsöffnungen 11 mögen als Düsen, z.B. Spritzdüsen, ausgebildet sein.

Die wellenartige Querschnittsform des Dichtelements 7 ist im speziellen mäanderförmig mit geradlinigen Abschnitten L, wobei zwei benachbarte geradlinige Abschnitte L über halbringförmige Spitzenabschnitte S1 bis S5 verbunden sind. Die beiden endständigen geradlinigen Abschnitte L sind fest mit einem oberen freien Rand 12 des starren Bereichs 4 verbunden, z.B. daran angeklebt. Von den Spitzenabschnitten S1 bis S5 liegen die beiden unteren Spitzenabschnitte S2 und S4 den Austrittsöffnungen 10 und 11 direkt gegenüber. Ohne die Stellvorrichtung 8 wären die Spitzenabschnitte S2 und S4 von den Austrittsöffnungen 10 und 11 beabstandet, so dass die Austrittsöffnungen 10 und 11 dann geöffnet bzw. nicht verschlossen wären.

Die Stellvorrichtung 8 weist zwei von oben bzw. außen in das Dichtelement 7 eingesetzte Stangen 13 und 14 auf, welche außen (also an der dem wasserführenden Raum abgewandten Seite) an den Spitzenabschnitten S2 und S4 aufliegen. Die Stangen 13, 14 erstrecken sich in Längserstreckung des Dichtelements. Die Stangen 13, 14 sind als Endbereiche eines zweiarmigen Hebelarms 15 ausgebildet, welcher um eine feste Drehachse D drehbar ist. Der Hebelarm 15 ist mittels eines Aktors (o. Abb.) verschwenkbar, und zwar zumindest zwischen der gezeigten ersten Endstellung und der in Fig.4 gezeigten zweiten Endstellung.

In der hier gezeigten ersten Endstellung ist der Hebel 13 bis 15 so verschwenkt, dass er mittels der Stange 13 den Spitzenabschnitt S2 dichtend auf die Reihe der Austrittsöffnungen 10 der ersten Gruppe G1 drückt. Die Austrittsöffnungen 11 der zweiten Gruppe G2 bleiben hingegen offen. Wird in dieser ersten Endstellung Wasser durch das Fallrohr R abgelassen, drückt es durch die Austrittsöffnungen 11 der zweiten Gruppe G2 und bespritzt den Verdampfer V. Dadurch können an dem Verdampfer V anhaftende Flusen oder andere Verunreinigungen abgespült werden, was eine Wärmeübertragungseffektivität verbessert.

**Fig.4** zeigt die Flüssigkeitsweiche 1 mit der Stellvorrichtung 8 in einer zweiten Endstellung. In der zweiten Endstellung ist der Hebel 13 bis 15 so verschwenkt, dass mittels der Stange 14 der Spitzenabschnitt S4 dichtend auf die Reihe der Austrittsöffnungen 11 der ersten Gruppe G2 gedrückt wird. Die Austrittsöffnungen 10 der zweiten Gruppe G1 sind hingegen freigegeben. Wird in dieser zweiten Endstellung Wasser durch das Fallrohr R abgelassen, drückt es durch die Austrittsöffnungen 10 der ersten Gruppe G1 und lässt mehrere Wasserstrahlen auf den schrägstehenden Prozessluftfilter F strömen. Dadurch können an dem Prozessluftfilter F anhaftende Flusen oder andere Verunreinigungen abgespült werden, was eine Filterleistung verbessert. Die beiden Endpositionen können wechselweise eingenommen werden. Es ist auch möglich, den Hebel 13 bis 15 in eine Zwischenposition zu stellen, in welcher der Hebelarm 15 waagerecht steht und die Austrittsöffnungen 10 und 11 beider Gruppen G1 und G2 freigegeben sind. Dann können gleichzeitig sowohl der Verdampfer V als auch der Prozessluftfilter F abgereinigt werden.

Selbstverständlich ist die vorliegende Erfindung nicht auf das gezeigte Ausführungsbeispiel beschränkt.

So können durch einen zweiarmigen Hebel in einer Endstellung auch mehrere Reihen von Austrittsöffnungen abgedichtet bzw. verschlossen werden, z.B. durch entsprechend breite, z.B. rechteckige, Spitzenabschnitte oder durch mehrere Spitzenabschnitte auf einer Seite des Hebels, welche durch jeweils eine Stange heruntergedrückt werden. Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw. Auch kann eine Zahlenangabe genau die angegebene Zahl als auch einen üblichen Toleranzbereich umfassen, solange dies nicht explizit ausgeschlossen ist.

### Bezugszeichenliste

- 1: Flüssigkeitsweiche
- 2: Eintrittsöffnung der Flüssigkeitsweiche
- 3: hinterer Endabschnitt
- 4: starrer Bereich der Flüssigkeitsweiche
- 5: Verteilerabschnitt
- 6: offene Oberseite des Verteilerabschnitts
- 7: Dichtelement
- 8: Stellvorrichtung
- 9: Boden des Verteilerabschitts
- 10: Austrittsöffnung
- 11: Austrittsöffnung
- 12: oberer freier Rand des starren Bereichs
- 13: Stange
- 14: Stange
- 15: Hebelarm
- D: Drehachse
- E1: oberes Ende des Fallrohrs
- E: unteres Ende des Fallrohrs
- G1: erste Gruppe von Austrittsöffnungen
- G2: zweite Gruppe von Austrittsöffnungen
- F: Prozessluftfilter
- K: Prozessluftkanal
- L: geradliniger Abschnitt
- R: Fallrohr
- S: Drechachse
- S1-S5: Spitzenabschnitt
- V: Verdampfer
- W: Wärmepumpen-Wäschetrockner

## Patentansprüche

1. Flüssigkeitsweiche (1) zum Verteilen einer Flüssigkeit in einem Haushaltsgerät (W), wobei die Flüssigkeitsweiche (1) mindestens aufweist:
- mindestens eine erste Gruppe (G1) von Austrittsöffnungen (10) und eine zweite Gruppe (G2) von Austrittsöffnungen (11),
**gekennzeichnet durch**
- einen starren Bereich (4), in welchem die Austrittsöffnungen (10, 11) gruppenweise in mehreren Reihen eingebracht sind; und
- ein den Austrittsöffnungen (10, 11) gemeinsames flexibles Dichtelement (7), welches mittels mindestens einer Stellvorrichtung (8) dichtend abwechselnd auf die erste Gruppe (G1) von Austrittsöffnungen (10) und auf die zweite Gruppe (G2) von Austrittsöffnungen (11) drückbar ist.

2. Flüssigkeitsweiche (1) nach Anspruch 1, wobei die Austrittsöffnungen (10, 11) zumindest einer Gruppe (G1, G2) als Düsen ausgebildet sind.

3. Flüssigkeitsweiche (1) nach einem der vorhergehenden Ansprüche, wobei der starre Bereich (4) zwei parallel zueinander angeordnete Gruppen (G1, G2) von Austrittsöffnungen (10, 11) aufweist.

4. Flüssigkeitsweiche (1) nach einem der vorhergehenden Ansprüche, wobei
- das Dichtelement (1) eine gewellte Querschnittsform mit aufeinanderfolgenden Spitzenabschnitten (S1-S5) aufweist und
- die Stellvorrichtung (8) dazu eingerichtet ist, mindestens einen Spitzenabschnitt (S2, S4) des Dichtelements (7) auf jeweils eine Gruppe (G1, G2) von Austrittsöffnungen (10, 11) zu drücken.

5. Flüssigkeitsweiche (1) nach Anspruch 4, wobei die Stellvorrichtung (8) einen zweiarmigen Hebel (13-15) und eine Stelleinheit zum Verschwenken des Hebels (13-15) zwischen zwei Endstellungen aufweist, wobei je nach Endstellung unterschiedliche Spitzenabschnitte (S2, S4) des Dichtelements (7) reihenweise abwechselnd auf die zugehörigen Gruppen (G1, G2) von Austrittsöffnungen (10, 11) gedrückt werden können.

6. Flüssigkeitsweiche (1) nach einem der vorhergehenden Ansprüche, wobei mindestens eine Stellvorrichtung (8) auf eine Stellposition einstellbar ist, in welcher sie das Dichtelement (7) auf keine Gruppe von Austrittsöffnungen (10, 11) drückt.

7. Flüssigkeitsweiche (1) nach einem der vorhergehenden Ansprüche, wobei die Flüssigkeitsweiche eine Einlassöffnung (2) an einer Seite aufweist und die Austrittsöffnungen (10, 11) an einer dazu gegenüberliegenden Seite (9) angeordnet sind.

8. Haushaltsgerät (W), aufweisend
- mindestens zwei mittels einer Flüssigkeit abzureinigende Funktionseinheiten (V, F) und
- mindestens eine Flüssigkeitsweiche (1) nach einem der vorhergehenden Ansprüche, deren Gruppen (G1, G2) von Austrittsöffnungen (10, 11) zur gruppenweisen Flüssigkeitszufuhr zu zumindest zwei abzureinigenden Funktionseinheiten (V, F) eingerichtet ist.

9. Haushaltsgerät (W) nach Anspruch 8, wobei die Gruppen (G1, G2) von Austrittsöffnungen (10, 11) zum gruppenweisen Bespritzen von zumindest zwei abzureinigenden Funktionseinheiten (V, F) eingerichtet sind.

10. Haushaltsgerät (W) nach einem der Ansprüche 8 und 9, wobei das Haushaltsgerät (W) ein Wäschetrocknungsgerät (W) ist und eine erste abzureinigende Funktionseinheit in Form eines Prozessluftfilters (F) und eine zweite abzureinigende Funktionseinheit in Form eines Wärmetauschers (V) vorliegt.

11. Haushaltsgerät (W) nach einem der Ansprüche 8 bis 10, aufweisend
- einen Spülbehälter (S) mit einem daran verschließbar angeschlossenen Fallrohr (R),
- welches Fallrohr (R) an seinem dem Spülbehälter (S) abgewandten Ende (E2) die Flüssigkeitsweiche (1) aufweist.

## Claims

1. Liquid divider (1) for distribution of a liquid in a domestic appliance (W), wherein the liquid divider (1) at least has:
- at least one first group (G1) of outlet openings (10) and one second group (G2) of outlet openings (11),
**characterised by**
- a rigid region (4), in which the outlet openings (10, 11) are brought into a plurality of rows in groups; and
- a flexible sealing element (7) shared among the outlet openings (10, 11), which can be pressed alternately against the first group (G1) of outlet openings (10) and against the second group (G2) of outlet openings (11) by means of at least one actuating apparatus (8) in a sealing manner.

2. Liquid divider (1) according to claim 1, wherein the outlet openings (10, 11) of at least one group (G1, G2) are embodied as nozzles.

3. Liquid divider (1) according to one of the preceding claims, wherein the rigid region (4) has two groups (G1, G2) of outlet openings (10, 11) arranged in parallel with one another.

4. Liquid divider (1) according to one of the preceding claims, wherein
- the sealing element (1) has an undulating cross-sectional shape with successive peak sections (S1-S5) and
- the actuating apparatus (8) is configured to press at least one peak section (S2, S4) of the sealing element (7) against a group (G1, G2) of outlet openings (10, 11) in each case.

5. Liquid divider (1) according to claim 4, wherein the actuating apparatus (8) has a twin-armed lever (13-15) and an actuating unit for pivoting the lever (13-15) between two end positions, wherein, depending on the end position, different peak sections (S2, S4) of the sealing element (7) can be pressed alternately against the respective groups (G1, G2) of outlet openings (10, 11) one after the other.

6. Liquid divider (1) according to one of the preceding claims, wherein at least one actuating apparatus (8) can be set to an actuating position, in which it does not press the sealing element (7) against a group of outlet openings (10, 11).

7. Liquid divider (1) according to one of the preceding claims, wherein the liquid divider has an inlet opening (2) on one side and the outlet openings (10, 11) are arranged on a side (9) opposite thereto.

8. Domestic appliance (W), having
- at least two functional units (V, F) to be cleaned by means of a liquid and
- at least one liquid divider (1) according to one of the preceding claims, the groups (G1, G2) of outlet openings (10, 11) thereof being configured for supplying liquid to at least two functional units (V, F) to be cleaned in groups.

9. Domestic appliance (W) according to claim 8, wherein the groups (G1, G2) of outlet openings (10, 11) are configured for spraying at least two functional units (V, F) to be cleaned in groups.

10. Domestic appliance (W) according to one of claims 8 and 9, wherein the domestic appliance (W) is a tumble drying appliance (W) and a first functional unit to be cleaned is present in the form of a process air filter (F) and a second functional unit to be cleaned is present in the form of a heat exchanger (V).

11. Domestic appliance (W) according to one of claims 8 to 10, having
- a washing cavity (S) with a downpipe (R) connected thereto such that it can be closed,
- which downpipe (R) has the liquid divider (1) at its end (E2) facing away from the washing cavity (S).

## Revendications

1. Répartiteur de liquide (1) pour la distribution d'un liquide dans un appareil ménager (W), le répartiteur de liquide (1) comprenant au moins :
- au moins un premier groupe (G1) d'orifices de sortie (10) et un deuxième groupe (G2) d'orifices de sortie (11),
**caractérisé par**
- une zone rigide (4) dans laquelle les orifices de sortie (10, 11) sont ménagés par groupes en plusieurs rangées ; et
- un élément d'étanchéité souple (7) commun aux orifices de sortie (10, 11), lequel peut être pressé de manière étanche au moyen d'au moins un dispositif de réglage (8) en alternance sur le premier groupe (G1) d'orifices de sortie (10) et sur le deuxième groupe (G2) d'orifices de sortie (11).

2. Répartiteur de liquide (1) selon la revendication 1, dans lequel les orifices de sortie (10, 11) d'au moins un groupe (G1, G2) se présentent sous forme de buses.

3. Répartiteur de liquide (1) selon l'une des revendications précédentes, dans lequel la zone rigide (4) comprend deux groupes (G1, G2) disposés parallèlement l'un par rapport à l'autre d'orifices de sortie (10, 11).

4. Répartiteur de liquide (1) selon l'une des revendications précédentes, dans lequel
- l'élément d'étanchéité (1) comprend une forme de section transversale ondulée avec des segments de sommet successifs (S1 à S5) et
- le dispositif de réglage (8) est conçu pour presser au moins un segment de sommet (S2, S4) de l'élément d'étanchéité (7) sur respectivement un groupe (G1, G2) d'orifices de sortie (10, 11).

5. Répartiteur de liquide (1) selon la revendication 4, dans lequel le dispositif de réglage (8) comprend un levier à deux bras (13 à 15) et une unité de réglage pour le pivotement du levier (13 à 15) entre deux positions finales, dans lequel des segments de sommet différents (S2, S4) de l'élément d'étanchéité (7) peuvent être pressés en série en alternance sur les groupes correspondants (G1, G2) d'orifices de sortie (10, 11) en fonction de la position finale.

6. Répartiteur de liquide (1) selon l'une des revendications précédentes, dans lequel au moins un dispositif de réglage (8) est réglable sur une position de réglage dans laquelle il ne presse l'élément d'étanchéité (7) sur aucun groupe d'orifices de sortie (10, 11).

7. Répartiteur de liquide (1) selon l'une des revendications précédentes, le répartiteur de liquide comprenant un orifice d'entrée (2) sur un premier côté et les orifices de sortie (10, 11) étant disposés sur un côté (9) opposé à celui-ci.

8. Appareil ménager (W), comprenant
- au moins deux unités fonctionnelles (V, F) à nettoyer au moyen d'un liquide et
- au moins un répartiteur de liquide (1) selon l'une des revendications précédentes, dont les groupes (G1, G2) d'orifices de sortie (10, 11) sont conçus pour l'amenée groupée de liquide jusqu'à au moins deux unités fonctionnelles (V, F) à nettoyer.

9. Appareil ménager (W) selon la revendication 8, dans lequel les groupes (G1, G2) d'orifices de sortie (10, 11) sont conçus pour l'aspersion groupée d'au moins deux unités fonctionnelles (V, F) à nettoyer.

10. Appareil ménager (W) selon l'une des revendications 8 et 9, l'appareil ménager (W) étant un sèche-linge (W), et une première unité fonctionnelle à nettoyer se présentant sous la forme d'un filtre à air de traitement (F) et une deuxième unité fonctionnelle à nettoyer se présentant sous la forme d'un échangeur de chaleur (V).

11. Appareil ménager (W) selon l'une des revendications 8 à 10, comprenant
- une cuve de lavage (S) avec un tuyau de descente (R) raccordé à celle-ci de manière verrouillable,
- lequel tuyau de descente (R) comprend le répartiteur de liquide (1) au niveau de son extrémité (E2) opposée à la cuve de lavage (S).
